# EUROPEAN PATENT SPECIFICATION

(11) **EP 3 147 730 B1**
(45) Date of publication and mention of the grant of the patent: **21.09.2022**
(21) Application number: 15893538.7
(22) Date of filing: 30.11.2015
(51) Int. Cl.: H04M 19/04, H04L 65/40, G05B 19/04

(54) **SOUND BOX PARAMETER CONFIGURATION METHOD, MOBILE TERMINAL, SERVER, AND SYSTEM**
SCHALLKÖRPERPARAMETERKONFIGURATIONSVERFAHREN, MOBILES ENDGERÄT, SERVER UND SYSTEM
PROCÉDÉ DE CONFIGURATION DE PARAMÈTRES DE HAUT-PARLEUR, TERMINAL MOBILE, SERVEUR ET SYSTÈME

(30) Priority: 09.07.2015 CN 201510402365
(43) Date of publication of application: 29.03.2017
(73) Proprietor: GUANGDONG OPPO MOBILE TELECOMMUNICATIONS CORP., LTD., Wusha, Chang'an Dongguan, Guangdong 523860 (CN)
(72) Inventor: LIN, Shangbo, Dongguan Guangdong 523860 (CN)
(74) Representative: Mewburn Ellis LLP
(86) International application number: PCT/CN2015/096064
(87) International publication number: WO 2017/004929

(56) References cited:
- WO-A2-2007/074245
- CN-A- 103 581 816
- CN-A- 103 608 864
- CN-A- 104 093 102
- CN-A- 104 427 641
- US-A1- 2008 025 535
- US-A1- 2008 242 222
- US-A1- 2013 346 559

## Description

### TECHNICAL FIELD

The present disclosure relates to the field of electronic technology, and particularly to a speaker parameter configuration method, a mobile terminal, a server, and a system.

### BACKGROUND

In a wireless speaker system including a plurality of wireless speakers, the speakers can form a private network wirelessly. Generally, within this private network, a logical main wireless speaker can be configured to couple with a router in a wired or wireless manner so as to access an external network directly, and other slave speakers can access the external network via the main wireless speaker.

For a mobile terminal, in order to set a wireless speaker system through an APP, usually, the user has to add wireless speakers for different scenes into the wireless speaker system manually and create song catalogs, add tracks, as well as set volume, sound effect, and other speaker parameters.

US 2008/0242222 A1 discloses the details regarding how to take control of the wireless audio system capability, for example, command formats, how the system responds, parameters, variables rules, and a user of the personal computer is able to make complex changes to group via interface in this way-for example configuring surround sound, removing wireless speaker subsystems, setting up groups composed of one or more physical wireless speaker subsystems, zones composed of groups, which are in turn composed of physical wireless speaker subsystems, and so on.

US 2008/0025535 A1 discloses system architectures and processes for handling the provisioning, management and control of media renderers, and a plurality of media renderers are organized into a plurality of zones. In additional, provisioning is performed dynamically as mobile media sources move between zones, media renderers are dynamically detected, resources are allocated, and the system is configured for playback without noticeable interruption of the streaming and rendering of the media.

US 2013/346559A1 discloses Systems, methods, apparatus, and articles of manufacture to provide automated configuration of local playback devices and networks based on external input are disclosed. An example media playback device includes a control interface to receive and process, at the media playback device, network configuration information for a local network from an external source, the control interface to receive and process the network configuration from the external source without requiring user intervention. The example media playback device includes a wireless interface to communicate with the local network based at least in part on the network configuration information. The example media playback device includes a speaker to output audio based on audio information received via the local network.

### SUMMARY

The present disclosure relates to a speaker parameter configuration method, a mobile terminal, a server, and a system, which is helpful to enhance the convenience of speaker parameter configuration of a mobile terminal and improve user experience.

According to the first aspect of the present disclosure, there is provided a wireless speaker parameter configuration method as set out in claim 1, which is carried out by a mobile terminal and includes the following steps:
transmitting a parameter configuration request carrying a scene type combination of wireless speakers of a wireless speaker system to a server;
receiving a parameter configuration response sent by the server in response to the parameter configuration request; the parameter configuration response contains a speaker parameter configuration record of the wireless speaker system matched with the scene type combination and comprises parameters configured to set the attribute of playing of each wireless speaker, wherein the parameter comprises a volume parameter and a sound effect parameter; and
performing parameter configuration on the wireless speakers of the wireless speaker system through the use of the speaker parameter configuration record received.

According to the second aspect of the present disclosure, there is provided a wireless speaker parameter configuration method as set out in claim 4, which is carried out by a mobile terminal and includes the following steps:
receiving a parameter configuration request carrying a scene type combination of wireless speakers of a wireless speaker system from a mobile terminal; and
transmitting a parameter configuration response carrying a speaker parameter configuration record of the wireless speaker system matched with the scene type combination to the control terminal, whereby the mobile terminal performs parameter configuration on the wireless speakers of the wireless speaker system through the use of the speaker parameter configuration record received, whereby the speaker parameter configuration record comprises parameters configured to set the attribute of playing of each wireless speaker, wherein the parameter comprises a volume parameter and a sound effect parameter.

According to the third aspect of the present disclosure, there is provided a mobile terminal as set out in claim 6, which includes the following elements:
a transmitting unit, configured to transmit a parameter configuration request carrying a scene type combination of wireless speakers of a wireless speaker system to a server;
a first receiving unit, configured to receive a parameter configuration response sent by the server in response to the parameter configuration request, the parameter configuration response contains a speaker parameter configuration record of the wireless speaker system matched with the scene type combination, whereby the speaker parameter configuration record comprises parameters configured to set the attribute of playing of each wireless speaker, wherein the parameter comprises a volume parameter and a sound effect parameter; and
a configuring unit, configured to perform parameter configuration on the wireless speakers of the wireless speaker system through the use of the speaker parameter configuration record received.

According to the fourth aspect of the present disclosure, it is provided a server as set out in claim 8, which includes the following elements:
a receiving unit, configured to receive a parameter configuration request carrying a scene type combination of wireless speakers of a wireless speaker system from a mobile terminal; and
a first transmitting unit, configured to transmit a parameter configuration response carrying a speaker parameter configuration record of the wireless speaker system matched with the scene type combination to the control terminal, whereby the mobile terminal performs parameter configuration on the wireless speakers of the wireless speaker system through the use of the speaker parameter configuration record received, whereby the speaker parameter configuration record comprises parameters configured to set the attribute of playing of each wireless speaker, wherein the parameter comprises a volume parameter and a sound effect parameter.

According to the fifth aspect of the present disclosure, there is provided a wireless speaker parameter configuration system, which includes the mobile terminal of the third aspect and the server of the fourth aspect.

Through the technical scheme described above, the mobile terminal transmits the parameter configuration request carrying the scene type combination of wireless speakers of the wireless speaker system to the server and then receives the parameter configuration response, which is transmitted by the server in response to the parameter configuration request and contains the speaker parameter configuration record of the wireless speaker system matched with the scene type combination; thereafter, the mobile terminal performs parameter configuration on the wireless speakers of the wireless speaker system through the use of the speaker parameter configuration record received, whereby the speaker parameter configuration record comprises parameters configured to set the attribute of playing of each wireless speaker, wherein the parameter comprises a volume parameter and a sound effect parameter. The technical scheme has advantages that, with aid of the speaker parameter configuration record received, active settings is conducted by the mobile terminal without the need to set manually by user, therefore, convenience of speaker parameter configuration of the mobile terminal is enhanced and user experience is improved.

According to the sixth aspect of the present disclosure, there is provided a storage medium as set out in claim 11 configured to store application programs, when executed by an apparatus, the application programs adapted to perform the speaker parameter configuration method of the first aspect of the present disclosure.

According to the seventh aspect of the present disclosure, there is provided a storage medium as set out in claim 12 configured to store application programs, when executed by an apparatus, the application programs adapted to perform the speaker parameter configuration method of the second aspect of the present disclosure.

According to the eighth aspect of the present disclosure, there is provided an apparatus as set out in claim 13, which includes one or more processors and a memory storing one or more programs, when executed by the one or more processors, the one or more programs adapted to perform the speaker parameter configuration method of the first aspect of the present disclosure.

According to the ninth aspect of the present disclosure, there is provided an apparatus as set out in claim 14, which includes one or more processors and a memory storing one or more programs, when executed by the one or more processors, the one or more programs adapted to perform the speaker parameter configuration method of the second aspect of the present disclosure.

### BRIEF DESCRIPTION OF THE DRAWINGS

In order to illustrate the technical solutions of the present disclosure or the related art more clearly, a brief description of the accompanying drawings used herein is given below. Obviously, the drawings listed below are only examples, and a person skilled in the art should be noted that, other drawings also is obtained on the basis of these exemplary drawings without creative work.
FIG. 1 is a network architecture diagram according to an embodiment of the present disclosure;
FIG. 2 is a schematic flowchart illustrating a speaker parameter configuration method according to an embodiment of the present disclosure;
FIG. 3 is a schematic flowchart illustrating another speaker parameter configuration method according to an embodiment of the present disclosure;
FIG. 4 is a schematic flowchart illustrating another speaker parameter configuration method according to an embodiment of the present disclosure;
FIG. 5 is a schematic structure diagram illustrating a mobile terminal according to an embodiment of the present disclosure;
FIG. 6 is a schematic structure diagram illustrating a server according to an embodiment of the present disclosure;
FIG. 7 is a schematic structure diagram illustrating another mobile terminal according to an embodiment of the present disclosure; and
FIG. 8 is an architecture diagram illustrating a speaker parameter configuration system according to an embodiment of the present disclosure.

### DETAILED DESCRIPTION OF ILLUSTRATED EMBODIMENTS

Technical schemes of the present disclosure will be described in detail below with refer to embodiments in conjunction with accompanying drawings. Embodiments described herein are used to explain rather than restrict the present disclosure. Only relevant parts rather than the whole structure of the present disclosure are illustrated in the accompanying drawings.

Terms such as "first", "second", "third", "fourth" and the like used herein aims to distinguish among different objects and is not intend to define a specific order. Terms such as "comprise", "include", or "have/has" used herein means a nonexclusive containment relationship. For example, a process, a method, a system, a product, or an apparatus described herein can include other steps or units in addition to those explained in the disclosure.

"Embodiment" used herein means that, specific features, structures, or characteristics can be included in at least one embodiment of the present disclosure. "Embodiment" appeared throughout the specification does not necessarily refer to the same embodiment or an independent or alternative embodiment conflicts with other embodiments. Each embodiment described herein can be combined with other embodiments without confliction.

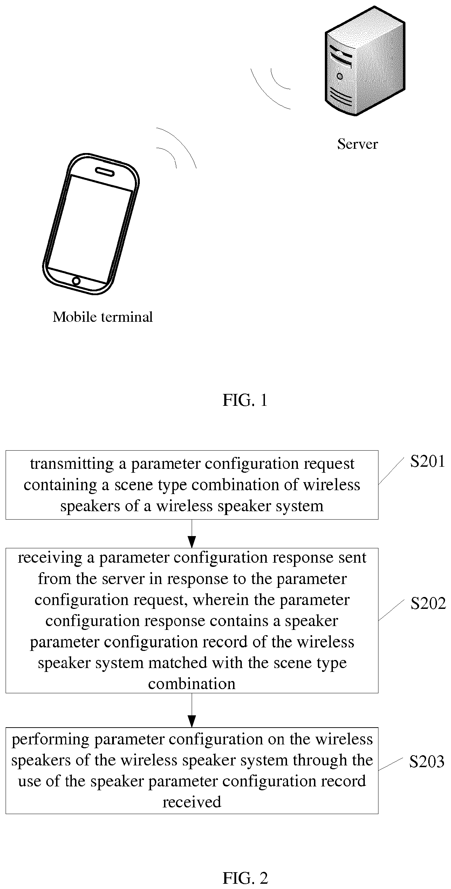

In order to better understand the speaker parameter configuration method, the mobile terminal, the server, and the system of the present disclosure, a network architecture to which embodiments of the present disclosure is applied will be described. FIG. 1 is diagram illustrating the network architecture according to an embodiment of the present disclosure. As illustrated in FIG. 1, the network architecture includes a mobile terminal and a server, among which the mobile terminal is coupled to the server wirelessly (such as via Wi-Fi, mobile communication network) for communication. The mobile terminal referred to is a mobile phone, a tablet PC, a Personal Digital Assistant (PDA), a Mobile Internet Device (MID), an intelligent wearable device (such as smart watch, smart Bracelet), and other mobile terminals, the present disclosure is not limited thereto. With aid of the network architecture illustrated in FIG. 1, picture display at the mobile terminal is more interesting and user experience is improved.

Based on the network architecture illustrated in FIG. 1, the present discourse provides a speaker parameter configuration method for a wireless speaker system. FIG. 2 is a schematic flowchart illustrating the method. As illustrated in FIG. 2, the speaker parameter configuration method includes the following steps.

S201, a parameter configuration request carrying a scene type combination of wireless speakers of a wireless speaker system is transmitted to a server.

In one embodiment, the process of transmitting the parameter configuration request carrying the scene type combination of wireless speakers of the wireless speaker system to the server includes the following operations: receiving a creating instruction concerning the wireless speaker system from the user; acquiring the scene type combination formed by scene types of the wireless speakers added in the creating instruction; and transmitting the parameter configuration request carrying the scene type combination of the wireless speakers to the server.

The wireless speaker system is a music playing system including a plurality of speakers (such as a wireless speaker, a Bluetooth speaker, an intelligent speaker, and the like) via a private network (such as a MESH network). In the music playing system, a logical main speaker is designated to conduct data and control instruction interactions with an APP installed in a control terminal of the user via a home network (such as a Wi-Fi network); after receiving an instruction sent through an APP of the mobile terminal from the user, the main speaker transfers the instruction to other wireless speakers of the wireless speaker system via the private network of the wireless speaker system.

For example, a wireless speaker system is provided with a bedroom speaker, a living room speaker 1, and a living room speaker 2. Through an APP installed on a smart phone, the user sets the volume of the bedroom speaker to be 10 as well as set the volume of the living room speaker 1 and the living room speaker 2 to be 15, among which the bedroom speaker is designated to be the main device of the wireless speaker system. In this situation, after receiving a control instruction configured to set the volume of the wireless speaker system from the mobile terminal, the bedroom speaker will transfer this control instruction to the living room speaker 1 and the living room speaker 2 respectively via the private network of the wireless speaker system.

The scene type combination of wireless speakers of the wireless speaker system includes the room type or location type of a room or location that the wireless speaker system belongs to. The room type or location type includes one or more of bedroom, living room, study room, kitchen, garden, bath room, or other common household room or location.

For example, a wireless speaker system includes three wireless speakers, that is, "Bedroom 1", "Bedroom 2", and "Study room"; in this case, the scene type combination of wireless speakers of the wireless speaker system includes (bedroom; study room).

As another example, a wireless speaker system includes three wireless speakers, that is, "Living room 1", "Living room 2", and "Living room 3"; in this case, the scene type combination of wireless speakers of the wireless speaker system includes (living room).

S202, a parameter configuration response sent by the server in response to the parameter configuration request is received; the parameter configuration response contains a speaker parameter configuration record of the wireless speaker system matched with the scene type combination.

Parameters in the speaker parameter configuration record matched with the scene type combination of the wireless speakers includes a volume parameter value or sound effect parameter value of a wireless speaker or one or more other parameters configured to set the attribute of playing of the wireless speaker.

It is understood that, the speaker parameter configuration record of the wireless speaker system matched with the scene type combination of the wireless speakers is implemented in various forms such as those listed below:

{system 1: living room speaker (volume 11, sound effect 11), bedroom speaker (volume 12, sound effect 12)};

{system 1: living room speaker (volume 13, sound effect 13), bedroom speaker (volume 14, sound effect 14)};

{system 1: living room speaker (volume 12, sound effect 12), bedroom speaker (volume 16, sound effect 16)}.

Among which the scene type combination of wireless speakers of the wireless speaker system 1 includes (living room; bedroom).

As another example, the speaker parameter configuration record of the wireless speaker system matched with the scene type combination of the wireless speakers also is implemented in the forms listed below:
{system 1: 07:00; living room speaker (volume 11), bedroom speaker (volume 12)};
{system 1: 07:30; living room speaker (volume 13), bedroom speaker (volume 14)};
{system 1: 08:30; living room speaker (volume 12), bedroom speaker (volume 16)}.

Among which the scene type combination of wireless speakers of the wireless speaker system 1 includes (living room; bedroom). "Time" appeared in each speaker parameter configuration record refers to the moment (24-hour system) at which the volume parameter of the living room speaker/bedroom speaker is set by user.

S203, parameter configuration is performed on the wireless speakers of the wireless speaker system through the use of the speaker parameter configuration record received.

In one implementation, the process of performing parameter configuration on the wireless speakers of the wireless speaker system through the use of the speaker parameter configuration record received by the mobile terminal is implemented as follows: the control terminal generates a target speaker parameter configuration record based on the speaker parameter configuration record received, and configures the wireless speakers of the wireless speaker system in accordance with the target speaker parameter configuration record.

In real practice, there are more than one speaker parameter configuration record received.

Based on this, the mobile terminal generates the target speaker parameter configuration record based on any of a plurality of speaker parameter configuration records received. Or, the mobile terminal generates the target speaker parameter configuration record based on the all of the plurality of speaker parameter configuration records received.

For example, the mobile terminal generates the target speaker parameter configuration record based on a plurality of speaker parameter configuration records received as follows: suppose the number of speaker parameter configuration records is N, and in each speaker parameter configuration record, the number of speakers is Y and the number of parameter types is X; based on this fact, in the target speaker parameter configuration record, the value of Parameter j (wherein j is an integer between 1 to X) of Speaker i (wherein i is an integer between 1 to Y) is set to be equal to the average value of the sum of Parameter j of Speaker i in each speaker parameter configuration record; wherein Y, X, N are positive integers, Speaker i is any speaker among the speakers (that is, Speaker 1, Speaker 2, ...Speaker i,.., Speaker Y), and Parameter j is any parameter type among the parameter types (that is, Parameter 1, Parameter 2, ... Parameter j,..., Parameter X).

As another example, the mobile terminal extracts a specific speaker parameter configuration record from the plurality of speaker parameter configuration records; the specific speaker parameter configuration record has a minimum relative time difference between a record creating time and a receiving time of the parameter configuration request. Influence of a specific date on the record creating time is not considered when determining the relative time difference, which will be defined in the 24-hour system only. For example, suppose the record creating time in the plurality of speaker parameter configuration records is Setting time 1 (7:40'20" am), Setting time 2 (7:50'30" am), Setting time 3 (7:35'20" am), and the receiving time of the parameter configuration request is 8:40'20" am, based on this, the mobile terminal will extract the speaker parameter configuration record corresponding to Setting time 2.

After the target speaker configuration record is generated, the mobile terminal transmits a configuration instruction to a main speaker of the wireless speaker system via a home network such as a Wi-Fi network, wherein, the configuration instruction is for indicating performing parameter configuration on wireless speakers of the wireless speaker system through the use of the target speaker parameter configuration record. After the configuration instruction is received, the main speaker transfers the configuration instruction to other wireless speakers of the wireless speaker system via a private network (such as a MESH network) of the wireless speaker system described above, whereby other speakers performs parameter configuration through the use of the target speaker parameter configuration record.

Through the technical scheme described above, the mobile terminal transmits the parameter configuration request carrying the scene type combination of wireless speakers of the wireless speaker system to the server and then receive the parameter configuration response, which is transmitted by the server in response to the parameter configuration request and contains the speaker parameter configuration record of the wireless speaker system matched with the scene type combination; thereafter, the mobile terminal performs parameter configuration on the wireless speakers of the wireless speaker system through the use of the speaker parameter configuration record received. The technical scheme has advantages that, with aid of the speaker parameter configuration record received, active settings is conducted by the mobile terminal without the need to set manually by user, therefore, convenience of speaker parameter configuration of the mobile terminal is enhanced and user experience is improved.

As another implementation, after configuring wireless speakers of the wireless speaker system through the use of the speaker parameter configuration record received, the mobile terminal further receives a song catalog of the wireless speaker system matched with the scene type combination and control the wireless speakers of the wireless speaker system to play songs corresponding to the song catalog.

The server connected with the mobile terminal for communication is configured to store one or more song catalogs matched with the scene type combination of the wireless speakers with the wireless speaker system. For example, the scene type combination is (bedroom; living room), and the song catalog matched with this scene type combination includes Song Catalog 1 (song 1, song 2, song 3), Song Catalog 2 (song 4, song 5, song 6), and Song Catalog 3 (song 8, song 9, song 10).

In one instance, the server extracts a song catalog of the wireless speaker system matched with the scene type combination of the wireless speakers randomly, for example, select Song Catalog 2 (song 4, song 5, song 6) matched with the scene type combination (bedroom; living room).

In another instance, the server extracts a combination of more than one song catalog of the wireless speaker system matched with the scene type combination of the wireless speakers, for example, select a combination of Song Catalog 2 (song 4, song 5, song 6) and Song Catalog 3 (song 8, song 9, song 10) matched with the scene type combination (bedroom; living room). As to the manner of song catalog combination, for example, the server transmits corresponding song catalogs to the mobile terminal for the user to free combine and match so as to obtain the song catalog for the wireless speaker system to use.

If each song catalog relates to a catalog creating time, the server extracts a specific song catalog among a plurality of song catalogs as the song catalog to be used by the wireless speaker system, among which, the specific song catalog has a minimum relative time difference (24-hour system) between the catalog creating time and the receiving time of the parameter configuration request.

With aid of the above technical schemes, the mobile terminal receives one or more song catalogs sent by the server and control the wireless speaker system to play songs corresponding to the song catalog received, therefore, convenience of song catalog setting of the wireless speaker system by the mobile terminal is e enhanced and user experience is improved.

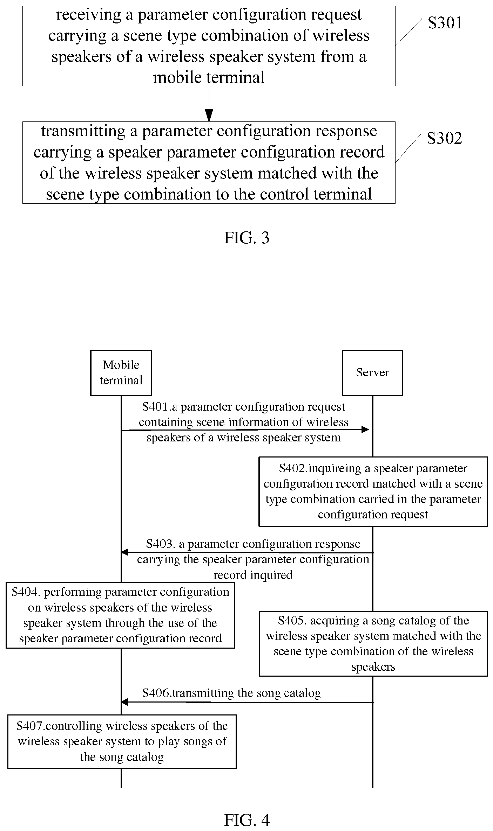

Based on the network architecture as illustrated in FIG. 1, the present disclosure provides a speaker parameter configuration method for a wireless speaker system and FIG. 3 is a schematic flowchart illustrating the method. As illustrated in FIG. 3, the speaker parameter configuration method includes the following steps.

S301, a parameter configuration request carrying a scene type combination of wireless speakers of a wireless speaker system is received from a mobile terminal.

The wireless speaker system is a music playing system including a plurality of speakers (such as a wireless speaker, a Bluetooth speaker, an intelligent speaker, and the like) via a private network (such as a MESH network). In the music playing system, a logical main speaker is designated to conduct data and control instruction interactions with an APP installed in a control terminal of the user via a home network (such as a Wi-Fi network); after receiving an instruction sent through an APP of the mobile terminal from the user, the main speaker transfers the instruction to other wireless speakers of the wireless speaker system via the private network of the wireless speaker system.

For example, a wireless speaker system is provided with a bedroom speaker, a living room speaker 1, and a living room speaker 2. Through an APP installed on a smart phone, the user sets the volume of the bedroom speaker to be 10 as well as set the volume of the living room speaker 1 and the living room speaker 2 to be 15, among which the bedroom speaker is designated to be the main device of the wireless speaker system. In this situation, after receiving a control instruction configured to set the volume of the wireless speaker system from the mobile terminal, the bedroom speaker will transfer this control instruction to the living room speaker 1 and the living room speaker 2 respectively via the private network of the wireless speaker system.

The scene type combination of wireless speakers of the wireless speaker system includes the room type or location type of a room or location that the wireless speaker system belongs to. The room type or location type includes one or more of bedroom, living room, study room, kitchen, garden, bath room, or other common household room or location.

For example, a wireless speaker system includes three wireless speakers, that is, "Bedroom 1", "Bedroom 2", and "Study room"; in this case, the scene type combination of wireless speakers of the wireless speaker system includes (bedroom; study room).

As another example, a wireless speaker system includes three wireless speakers, that is, "Living room 1", "Living room 2", and "Living room 3"; in this case, the scene type combination of wireless speakers of the wireless speaker system includes (living room).

S302, a parameter configuration response carrying a speaker parameter configuration record of the wireless speaker system matched with the scene type combination is transmitted to the control terminal, whereby the mobile terminal performs parameter configuration on the wireless speakers of the wireless speaker system through the use of the speaker parameter configuration record received.

Parameters in the speaker parameter configuration record matched with the scene type combination of the wireless speakers includes a volume parameter value or sound effect parameter value of a wireless speaker or one or more other parameters configured to set the attribute of playing of the wireless speaker.

It is understood that, the speaker parameter configuration record of the wireless speaker system matched with the scene type combination of the wireless speakers is implemented in various forms such as those listed below:
{system 1: living room speaker (volume 11, sound effect 11), bedroom speaker (volume 12, sound effect 12)};
{system 1: living room speaker (volume 13, sound effect 13), bedroom speaker (volume 14, sound effect 14)};
{system 1: living room speaker (volume 12, sound effect 12), bedroom speaker (volume 16, sound effect 16)}.
Among which the scene type combination of wireless speakers of the wireless speaker system 1 includes (living room; bedroom).

As another example, the speaker parameter configuration record of the wireless speaker system matched with the scene type combination of the wireless speakers also is implemented in the forms listed below:
{system 1: 07:00; living room speaker (volume 11), bedroom speaker (volume 12)};
{system 1: 07:30; living room speaker (volume 13), bedroom speaker (volume 14)};
{system 1: 08:30; living room speaker (volume 12), bedroom speaker (volume 16)}.

Among which the scene type combination of wireless speakers of the wireless speaker system 1 includes (living room; bedroom). "Time" appeared in each speaker parameter configuration record refers to the moment (24-hour system) at which the volume parameter of the living room speaker/bedroom speaker is set by user.

Through the technical scheme described above, the mobile terminal transmits the parameter configuration request carrying the scene type combination of wireless speakers of the wireless speaker system to the server and then receives the parameter configuration response, which is transmitted by the server in response to the parameter configuration request and contains the speaker parameter configuration record of the wireless speaker system matched with the scene type combination; thereafter, the mobile terminal performs parameter configuration on the wireless speakers of the wireless speaker system through the use of the speaker parameter configuration record received. The technical scheme has advantages that, with aid of the speaker parameter configuration record received, active settings is conducted by the mobile terminal without the need to set manually by user, therefore, convenience of speaker parameter configuration of the mobile terminal is enhanced and user experience is improved.

As one implementation, after transmitting the parameter configuration response, the server further transmits a song catalog of the wireless speaker system matched with the scene type combination to the mobile terminal, whereby the control terminal controls the wireless speakers of the wireless speaker system to play songs corresponding to the song catalog.

One or more song catalogs matched with the scene type combination of the wireless speakers with the wireless speaker system is stored in the server. For example, the scene type combination is (bedroom; living room), and the song catalog matched with this scene type combination includes Song Catalog 1 (song 1, song 2, song 3), Song Catalog 2 (song 4, song 5, song 6), and Song Catalog 3 (song 8, song 9, song 10).

In one instance, the server extracts a song catalog of the wireless speaker system matched with the scene type combination of the wireless speakers randomly, for example, select Song Catalog 2 (song 4, song 5, song 6) matched with the scene type combination (bedroom; living room).

In another instance, the server extracts a combination of more than one song catalog of the wireless speaker system matched with the scene type combination of the wireless speakers, for example, select a combination of Song Catalog 2 (song 4, song 5, song 6) and Song Catalog 3 (song 8, song 9, song 10) matched with the scene type combination (bedroom; living room). As to the manner of song catalog combination, for example, the server transmits corresponding song catalogs to the mobile terminal for the user to free combine and match so as to obtain the song catalog for the wireless speaker system to use.

If each song catalog relates to a catalog creating time, the server extracts a specific song catalog among a plurality of song catalogs as the song catalog to be used by the wireless speaker system, among which, the specific song catalog has a minimum relative time difference (24-hour system) between the catalog creating time and the receiving time of the parameter configuration request.

With aid of the above technical scheme, the mobile terminal receives one or more song catalogs sent by the server and control the wireless speaker system to play the songs corresponding to the song catalog received, therefore, convenience of song catalog setting of the wireless speaker system by the mobile terminal is enhanced and user experience is improved.

Based on the network architecture illustrated in FIG. 1, the present disclosure provides another speaker parameter configuration method for a wireless speaker system and FIG. 4 is a flowchart illustrating the method. As illustrated in FIG. 4, the speaker parameter configuration method includes the following steps.

S401, a control terminal transmits a parameter configuration request carrying a scene type combination of wireless speakers of a wireless speaker system to a server.

S402, the server receives the parameter configuration request and inquires a speaker parameter configuration record matched with the scene type combination of the parameter configuration request.

S403, the server transmits a parameter configuration response carrying the speaker parameter configuration record to the mobile terminal.

S404, the mobile terminal performs parameter configuration on wireless speakers of the wireless speaker system through the use of the speaker parameter configuration record received.

As one implementation, the process of performing parameter configuration on wireless speakers of the wireless speaker system through the use of the speaker parameter configuration record received by the mobile terminal is achieved as follows: the mobile terminal generates a target speaker parameter configuration record based on the speaker parameter configuration record received and perform configuration on the wireless speakers of the wireless speaker system in accordance with the target speaker parameter configuration record.

In real practice, there are more than one speaker parameter configuration record received.

Based on this, the mobile terminal generates the target speaker parameter configuration record based on any of a plurality of speaker parameter configuration records received. Or, the mobile terminal generates the target speaker parameter configuration record based on the all of the plurality of speaker parameter configuration records received.

For example, the mobile terminal generates the target speaker parameter configuration record based on a plurality of speaker parameter configuration records received as follows: suppose the number of speaker parameter configuration records is N, and in each speaker parameter configuration record, the number of speakers is Y and the number of parameter types is X; based on this fact, in the target speaker parameter configuration record, the value of Parameter j (wherein j is an integer between 1 to X) of Speaker i (wherein i is an integer between 1 to Y) is set to be equal to the average value of the sum of Parameter j of Speaker i in each speaker parameter configuration record; wherein Y, X, N are positive integers, Speaker i is any speaker among the speakers (that is, Speaker 1, Speaker 2, ...Speaker i,.., Speaker Y), and Parameter j is any parameter type among the parameter types (that is, Parameter 1, Parameter 2, ... Parameter j,..., Parameter X).

As another example, the mobile terminal extracts a specific speaker parameter configuration record from the plurality of speaker parameter configuration records; the specific speaker parameter configuration record has a minimum relative time difference between a record creating time and a receiving time of the parameter configuration request. Influence of a specific date on the record creating time is not considered when determining the relative time difference, which will be defined in the 24-hour system only. For example, suppose the record creating time in the plurality of speaker parameter configuration records is Setting time 1 (7:40'20" am), Setting time 2 (7:50'30" am), Setting time 3 (7:35'20" am), and the receiving time of the parameter configuration request is 8:40'20" am, based on this, the mobile terminal will extract the speaker parameter configuration record corresponding to Setting time 2.

After the target speaker configuration record is generated, the mobile terminal transmits a configuration instruction to a main speaker of the wireless speaker system via a home network such as a Wi-Fi network, wherein, the configuration instruction for indicating performing parameter configuration on wireless speakers of the wireless speaker system through the use of the target speaker parameter configuration record. After the configuration instruction is received, the main speaker transfers the configuration instruction to other wireless speakers of the wireless speaker system via a private network (such as a MESH network) of the wireless speaker system described above, whereby other speakers performs parameter configuration through the use of the target speaker parameter configuration record.

S405, the server acquires a song catalog of the wireless speaker system matched with the scene type combination of the wireless speakers.

S406, the server transmits the song catalog to the mobile terminal.

S407, the control terminal controls wireless speakers of the wireless speaker system to play songs corresponding to the song catalog.

Through the technical scheme described above, the mobile terminal transmits the parameter configuration request carrying the scene type combination of wireless speakers of the wireless speaker system to the server and then receives the parameter configuration response, which is transmitted by the server in response to the parameter configuration request and contains the speaker parameter configuration record of the wireless speaker system matched with the scene type combination; thereafter, the mobile terminal performs parameter configuration on the wireless speakers of the wireless speaker system through the use of the speaker parameter configuration record received. The technical scheme has advantages that, with aid of the speaker parameter configuration record received, active settings is conducted by the mobile terminal without the need to set manually by user, therefore, convenience of speaker parameter configuration of the mobile terminal is enhanced and user experience is improved.

Furthermore, the mobile terminal receives one or more song catalogs sent by the server and control the wireless speaker system to play songs corresponding to the song catalogs received; therefore, convenience of song catalog setting of the wireless speaker system by the mobile terminal is enhanced and user experience is improved.

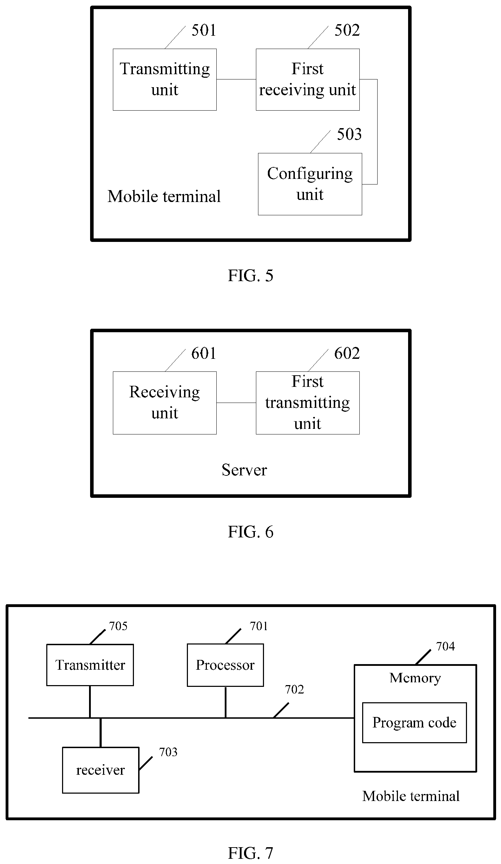

Based on the network architecture of FIG. 1, the present disclosure provides a mobile terminal and FIG. 5 is a structure schematic diagram illustrating the mobile terminal. As illustrated in FIG. 5, the mobile terminal includes a transmitting unit 501, a first receiving unit 502, and a configuring unit 503.

The transmitting unit 501 is configured to transmit a parameter configuration request carrying a scene type combination of wireless speakers of a wireless speaker system to a server.

The wireless speaker system is a music playing system including a plurality of speakers (such as a wireless speaker, a Bluetooth speaker, an intelligent speaker, and the like) via a private network (such as a MESH network). In the music playing system, a logical main speaker is designated to conduct data and control instruction interactions with an APP installed in a control terminal of the user via a home network (such as a Wi-Fi network); after receiving an instruction sent through an APP of the mobile terminal from the user, the main speaker transfers the instruction to other wireless speakers of the wireless speaker system via the private network of the wireless speaker system.

For example, a wireless speaker system is provided with a bedroom speaker, a living room speaker 1, and a living room speaker 2. Through an APP installed on a smart phone, the user sets the volume of the bedroom speaker to be 10 as well as set the volume of the living room speaker 1 and the living room speaker 2 to be 15, among which the bedroom speaker is designated to be the main device of the wireless speaker system. In this situation, after receiving a control instruction configured to set the volume of the wireless speaker system from the mobile terminal, the bedroom speaker will transfer this control instruction to the living room speaker 1 and the living room speaker 2 respectively via the private network of the wireless speaker system.

The first receiving unit 502 is configured to receive a parameter configuration response sent by the server in response to the parameter configuration request; the parameter configuration response contains a speaker parameter configuration record of the wireless speaker system matched with the scene type combination.

The configuring unit 503 is configured to perform parameter configuration on the wireless speakers of the wireless speaker system through the use of the speaker parameter configuration record received.

As one implementation, the mobile terminal further includes: a second receiving unit, configured to receive a song catalog of the wireless music system matched with the scene type combination from the server; and a playing unit, configured to control wireless speakers of the wireless speaker system to play songs corresponding to the song catalog.

The function of the mobile terminal is realized through the methods according to embodiments of the present disclosure, the realization procedure is comprehended with refer to relative descriptions of the embodiments given above and will not go into much detail here.

Through the technical scheme described above, the mobile terminal transmits the parameter configuration request carrying the scene type combination of wireless speakers of the wireless speaker system to the server and then receives the parameter configuration response, which is transmitted by the server in response to the parameter configuration request and contains the speaker parameter configuration record of the wireless speaker system matched with the scene type combination; thereafter, the mobile terminal performs parameter configuration on the wireless speakers of the wireless speaker system through the use of the speaker parameter configuration record received. The technical scheme has advantages that, with aid of the speaker parameter configuration record received, active settings is conducted by the mobile terminal without the need to set manually by user, therefore, convenience of speaker parameter configuration of the mobile terminal is enhanced and user experience is improved.

Through the above technical scheme, the mobile terminal receives one or more song catalogs sent by the server and control the wireless speaker system to play songs corresponding to the song catalogs received, therefore, it can be easy for the mobile terminal to set song catalogs of the wireless speaker system and user experience is improved.

Based on the network architecture illustrated in FIG. 1, the present disclosure further provides a server and FIG. 6 is a structure schematic diagram illustrating the server. As illustrated in FIG. 6, the server includes a receiving unit 601 and a first transmitting unit 602.

The receiving unit 601 is configured to receive a parameter configuration request carrying a scene type combination of wireless speakers of a wireless speaker system from a mobile terminal.

The first transmitting unit 602 is configured to transmit a parameter configuration response carrying a speaker parameter configuration record of the wireless speaker system matched with the scene type combination to the control terminal, whereby the mobile terminal performs parameter configuration on the wireless speakers of the wireless speaker system through the use of the speaker parameter configuration record received.

As one implementation, the server according to this embodiment still includes a second transmitting unit, which is configured to transmit a song catalog of the wireless speaker system matched with the scene type combination of the wireless speakers to the mobile terminal, whereby the mobile terminal controls wireless speakers of the wireless speaker system to play songs corresponding the song catalog.

The function of the server is realized through the methods according to embodiments of the present disclosure, the realization procedure is comprehended with refer to relative descriptions of the embodiments given above and will not go into much detail here.

Through the technical scheme described above, the mobile terminal transmits the parameter configuration request carrying the scene type combination of wireless speakers of the wireless speaker system to the server and then receive the parameter configuration response, which is transmitted by the server in response to the parameter configuration request and contains the speaker parameter configuration record of the wireless speaker system matched with the scene type combination; thereafter, the mobile terminal performs parameter configuration on the wireless speakers of the wireless speaker system through the use of the speaker parameter configuration record received. The technical scheme has advantages that, with aid of the speaker parameter configuration record received, active settings is conducted by the mobile terminal without the need to set manually by user, therefore, convenience of speaker parameter configuration of the mobile terminal is enhanced and user experience is improved.

Furthermore, the mobile terminal receives one or more song catalogs sent by the server and control the wireless speaker system to play songs corresponding to the song catalogs received, therefore, it is easy for the mobile terminal to set song catalogs of the wireless speaker system and user experience is improved.

Based on the network architecture of FIG. 1, the present disclosure provides another mobile terminal and FIG. 7 is a structure schematic diagram illustrating the mobile terminal. As illustrated in FIG. 7, the mobile terminal includes at least one processor 701 such as a CPU, at least one receiver 703, at least one memory 704, at least one transmitter 705, and at least one communication bus 702. The communication bus 702 is arranged for connection communication among these components. The receiver 703 and the transmitter 705 is a wired transmission interface or wireless equipment such as an antenna device respectively, and is arranged for signaling or data communication with other node equipment. The memory 704 is a high speed RAM memory or non-volatile memory; for example, it is at least one disk memory. As another instance, the memory 704 is at least one storing device away from the processor 701. The memory 704 is further configured to store a set of program code, when invoked by the processor 701, the program code is adapted to cause the processor 701 to perform the following processes:
transmitting a parameter configuration request carrying a scene type combination of wireless speakers of a wireless speaker system to a server;
receiving a parameter configuration response sent by the server in response to the parameter configuration request; the parameter configuration response contains a speaker parameter configuration record of the wireless speaker system matched with the scene type combination; and
performing parameter configuration on the wireless speakers of the wireless speaker system through the use of the speaker parameter configuration record received.

As one implementation, after the process of performing parameter configuration on the wireless speakers of the wireless speaker system through the use of the speaker parameter configuration record received, the processor 701 further invokes the program code to perform the following processes: receiving a song catalog of the wireless speaker system matched with the scene type combination from the server; and controlling the wireless speakers of the wireless speaker system to play songs corresponding to the song catalogs.

As one implementation, the process of transmitting the parameter configuration request carrying the scene type combination of wireless speakers of the wireless speaker system to the server performed by the processor 701 is achieved as follows: receiving a creating instruction with regard to the wireless speaker system sent by user; acquiring the scene type combination formed by scene types of the wireless speakers added in the creating instruction; and transmitting the parameter configuration request carrying the scene type combination of the wireless speakers to the server.

The function of the mobile terminal is realized through the methods according to embodiments of the present disclosure and the realization procedure is comprehended with refer to relative descriptions of the embodiments given above and will not go into much detail here.

Through the technical scheme described above, the mobile terminal transmits the parameter configuration request carrying the scene type combination of wireless speakers of the wireless speaker system to the server and then receives the parameter configuration response, which is transmitted by the server in response to the parameter configuration request and contains the speaker parameter configuration record of the wireless speaker system matched with the scene type combination; thereafter, the mobile terminal performs parameter configuration on the wireless speakers of the wireless speaker system through the use of the speaker parameter configuration record received. The technical scheme has advantages that, with aid of the speaker parameter configuration record received, active settings is conducted by the mobile terminal without the need to set manually by user, therefore, convenience of speaker parameter configuration of the mobile terminal is enhanced and user experience is improved.

Furthermore, the mobile terminal receives one or more song catalogs sent by the server and control the wireless speaker system to play songs corresponding to the song catalogs received, therefore, it is easy for the mobile terminal to set song catalogs of the wireless speaker system and user experience is improved.

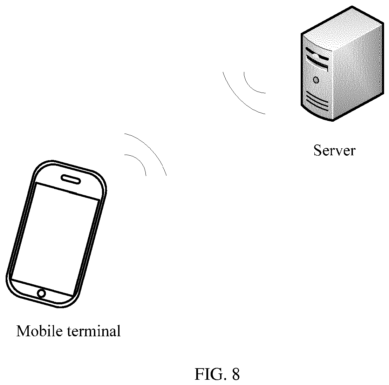

According to another embodiment of the present disclosure, it is provided a speaker parameter configuration system and FIG. 8 is an architecture diagram illustrating the system. As illustrated in FIG.8, the speaker parameter configuration system includes a mobile terminal and a server.

The mobile terminal provided in the speaker parameter configuration system is configured to transmit a parameter configuration request carrying a scene type combination of wireless speakers of a wireless speaker system to the server.

The server provided in the speaker parameter configuration system is configured to receive the parameter configuration request and inquire a speaker parameter configuration record matched with the scene type combination of the parameter configuration request.

The server is further configured to transmit a parameter configuration response carrying the speaker parameter configuration record inquired to the mobile terminal.

The mobile terminal is further configured to perform parameter configuration on the wireless speakers of the wireless speaker system through the use of the speaker parameter configuration record received from the server.

For instance, the process of performing parameter configuration on the wireless speakers of the wireless speaker system through the use of the speaker parameter configuration record by the mobile terminal is implemented as follows: generating a target speaker parameter configuration record based on the speaker parameter configuration record received and performing configuration on the wireless speakers of the wireless speaker system in accordance with the target speaker parameter configuration record generated.

In real practice, there are more than one speaker parameter configuration record received by the mobile terminal.

Based on this, in one implementation, the mobile terminal generates the target speaker parameter configuration record based on any of a plurality of speaker parameter configuration records received. Or, the mobile terminal generates the target speaker parameter configuration record based on the all of the plurality of speaker parameter configuration records received.

For example, the mobile terminal generates the target speaker parameter configuration record based on a plurality of speaker parameter configuration records received as follows: suppose the number of speaker parameter configuration records is N, and in each speaker parameter configuration record, the number of speakers is Y and the number of parameter types is X; based on this fact, in the target speaker parameter configuration record, the value of Parameter j (wherein j is an integer between 1 to X) of Speaker i (wherein i is an integer between 1 to Y) is set to be equal to the average value of the sum of Parameter j of Speaker i in each speaker parameter configuration record; wherein Y, X, N are positive integers, Speaker i is any speaker among the speakers (that is, Speaker 1, Speaker 2, ...Speaker i,.., Speaker Y), and Parameter j is any parameter type among the parameter types (that is, Parameter 1, Parameter 2, ... Parameter j,..., Parameter X).

As another example, the mobile terminal extracts a specific speaker parameter configuration record from the plurality of speaker parameter configuration records; the specific speaker parameter configuration record has a minimum relative time difference between a record creating time and a receiving time of the parameter configuration request. Influence of a specific date on the record creating time is not considered when determining the relative time difference, which will be defined in the 24-hour system only. For example, suppose the record creating time in the plurality of speaker parameter configuration records is Setting time 1 (7:40'20" am), Setting time 2 (7:50'30" am), Setting time 3 (7:35'20" am), and the receiving time of the parameter configuration request is 8:40'20" am, based on this, the mobile terminal will extract the speaker parameter configuration record corresponding to Setting time 2.

After the target speaker configuration record is generated, the mobile terminal transmits a configuration instruction to a main speaker of the wireless speaker system via a home network such as a Wi-Fi network, wherein, the configuration instruction is for indicating performing parameter configuration on wireless speakers of the wireless speaker system through the use of the target speaker parameter configuration record. After the configuration instruction is received, the main speaker transfers the configuration instruction to other wireless speakers of the wireless speaker system via a private network (such as a MESH network) of the wireless speaker system described above, whereby other speakers performs parameter configuration through the use of the target speaker parameter configuration record.

Besides, the server is further configured to acquire a song catalog of the wireless speaker system matched with the scene type combination of the wireless speakers and transmit the song catalogs to the mobile terminal.

The mobile terminal is further configured to control wireless speakers of the wireless speaker system to play songs corresponding to the song catalog received from the server.

Through the technical scheme described above, the mobile terminal transmits the parameter configuration request carrying the scene type combination of wireless speakers of the wireless speaker system to the server and then receives the parameter configuration response, which is transmitted by the server in response to the parameter configuration request and contains the speaker parameter configuration record of the wireless speaker system matched with the scene type combination; thereafter, the mobile terminal performs parameter configuration on the wireless speakers of the wireless speaker system through the use of the speaker parameter configuration record received. The technical scheme has advantages that, with aid of the speaker parameter configuration record received, active settings is conducted by the mobile terminal without the need to set manually by user, therefore, convenience of speaker parameter configuration of the mobile terminal is enhanced and user experience is improved.

Furthermore, the mobile terminal receives one or more song catalogs sent by the server and control the wireless speaker system to play the songs corresponding to the song catalogs received, therefore, it is easy for the mobile terminal to set song catalogs of the wireless speaker system and user experience is improved.

It should be noted that, for each method of the aforementioned embodiments, for ease of description, it has been referred to as a combination of a series of actions, those skilled in the art should be aware that this disclosure is not restricted by the sequence of the actions, in contradistinction, some steps can be performed in other sequence or simultaneously. In addition, those skilled in the art should also be aware that embodiments described herein are exemplary implementations only, operations and units involved are not necessarily for the implementation of the present disclosure.

Description of each embodiment focuses on different technical schemes; for contents not described in detail in one embodiment, please refer to relative descriptions in other embodiments.

Those skilled in the art should be noted that all or part of the steps of each method described above can be implemented through program instruction related hardware; the program instruction can be stored in a computer readable storage medium such as a flash memory, Read-Only memory (ROM), Random Access memory (RAM), disk, and CD.

## Claims

1. A wireless speaker parameter configuration method, carried out by a mobile terminal, the method comprising:
transmitting a parameter configuration request containing a scene type combination of wireless speakers of a wireless speaker system to a server; wherein, the scene type combination of wireless speakers of the wireless speaker system is a combination of scene types of the wireless speakers of the wireless speaker system, wherein the scene types comprise room types and location types;
receiving a parameter configuration response sent from the server in response to the parameter configuration request, wherein the parameter configuration response contains a speaker parameter configuration record of the wireless speaker system, wherein, the speaker parameter configuration record is matched with the scene type combination and comprises parameters configured to set the attribute of playing of each wireless speaker, wherein the parameter comprises a volume parameter and a sound effect parameter; and
performing parameter configuration on the wireless speakers of the wireless speaker system through the use of the speaker parameter configuration record received.

2. The method of claim 1, wherein after the process of performing parameter configuration on the wireless speakers of the wireless speaker system through the use of the speaker parameter configuration record received, the method further comprises:
receiving a song catalog of the wireless speaker system from the server, wherein the song catalog is matched with the scene type combination; and
controlling the wireless speakers of the wireless speaker system to play songs of the song catalog.

3. The method of claim 1 or 2, wherein the process of transmitting the parameter configuration request containing the scene type combination of wireless speakers of the wireless speaker system to the server comprises:
receiving a creating instruction concerning the wireless speaker system from a user;
acquiring the scene type combination formed by scene types of the wireless speakers added in the creating instruction; and
transmitting the parameter configuration request carrying the scene type combination of the wireless speakers to the server.

4. A wireless speaker parameter configuration method, carried out by a server, the method comprising:
receiving a parameter configuration request carrying a scene type combination of wireless speakers of a wireless speaker system from a mobile terminal; wherein, the scene type combination of wireless speakers of the wireless speaker system is a combination of scene types of the wireless speakers of the wireless speaker system, wherein the scene types comprise room types and location types; and
transmitting a parameter configuration response carrying a speaker parameter configuration record of the wireless speaker system to the mobile terminal, wherein the speaker parameter configuration record is matched with the scene type combination and comprises parameters configured to set the attribute of playing of the wireless speaker, wherein the parameter comprises a volume parameter and a sound effect parameter.

5. The method of claim 4, wherein after transmitting the parameter configuration response carrying the speaker parameter configuration record of the wireless speaker system matched with the scene type combination to the mobile terminal, the method further comprises:
transmitting a song catalog of the wireless music system to the mobile terminal, wherein the song catalog is matched with the scene type combination of the wireless speakers.

6. A mobile terminal comprising:
a transmitting unit (501), configured to transmit a parameter configuration request carrying a scene type combination of wireless speakers of a wireless speaker system to a server; wherein, the scene type combination of wireless speakers of the wireless speaker system is a combination of scene types of the wireless speakers of the wireless speaker system, wherein the scene types comprise room types and location types;
a first receiving unit (502), configured to receive a parameter configuration response sent by the server in response to the parameter configuration request, wherein the parameter configuration response contains a speaker parameter configuration record of the wireless speaker system, wherein the speaker parameter configuration record is matched with the scene type combination and comprises parameters configured to set the attribute of playing of each wireless speaker, wherein the parameter comprises a volume parameter and a sound effect parameter; and
a configuring unit (503), configured to perform parameter configuration on the wireless speakers of the wireless speaker system through the use of the speaker parameter configuration record received.

7. The mobile terminal of claim 6, further comprising:
a second receiving unit, configured to receive a song catalog of the wireless music system from the server, wherein the song catalog is matched with the scene type combination; and
a playing unit, configured to control the wireless speakers of the wireless speaker system to play songs of the song catalog.

8. A server comprising:
a receiving unit (601), configured to receive a parameter configuration request carrying a scene type combination of wireless speakers of a wireless speaker system from a mobile terminal; wherein, the scene type combination of wireless speakers of the wireless speaker system is a combination of scene types of the wireless speakers of the wireless speaker system, wherein the scene types comprise room types and location types; and
a first transmitting unit (602), configured to transmit a parameter configuration response carrying a speaker parameter configuration record of the wireless speaker system to the mobile terminal, wherein the speaker parameter configuration record is matched with the scene type combination and comprises parameters configured to set the attribute of playing of each wireless speaker, wherein the parameter comprises a volume parameter and a sound effect parameter.

9. The server of claim 8, further comprising:
a second transmitting unit, configured to transmit a song catalog of the wireless music system to the mobile terminal, wherein the song catalog is matched with the scene type combination of the wireless speakers.

10. A speaker parameter configuration system comprising a mobile terminal according to claim 6 or claim 7 and a server according to claim 8 or claim 9.

11. A storage medium having stored thereon application programs, wherein the application programs are adapted to perform the speaker parameter configuration method according to any one of claims 1-3.

12. A storage medium having stored thereon application programs, wherein the application programs are adapted to perform the speaker parameter configuration method according to claim 4 or claim 5.

13. An apparatus, comprising:
one or more processors; and
a memory having stored thereon one or more programs, wherein the one or more programs are adapted to cause the one or more processors perform the speaker parameter configuration method according to any one of claims 1-3.

14. An apparatus, comprising:
one or more processors; and
a memory having stored thereon one or more programs, wherein the one or more programs are adapted to cause the one or more processors to perform the speaker parameter configuration method according to claim 4 or claim 5.

## Patentansprüche

1. Drahtloslautsprecherparameterauslegungsverfahren, das von einem mobilen Endgerät ausgeführt wird, wobei das Verfahren folgende Vorgänge umfasst:
Senden einer Parameterauslegungsanforderung, die eine Szenentypkombination von Drahtloslautsprechern eines Drahtloslautsprechersystems enthält, an einen Server;
wobei die Szenentypkombination von Drahtloslautsprechern des Drahtloslautsprechersystems eine Kombination von Szenentypen der Drahtloslautsprecher des Drahtloslautsprechersystems ist, wobei die Szenentypen Raumtypen und Ortstypen umfassen;
Empfangen einer Parameterauslegungsantwort, die vom Server als Antwort auf die Parameterauslegungsanforderung gesendet wird, wobei die Parameterauslegungsantwort einen Lautsprecherparameterauslegungsdatensatz des Drahtloslautsprechersystems enthält, wobei der Lautsprecherparameterauslegungsdatensatz auf die Szenentypkombination abgestimmt ist und Parameter umfasst, die dafür ausgelegt sind, das Attribut der Wiedergabe jedes Drahtloslautsprechers einzustellen, wobei der Parameter einen Lautstärkeparameter und einen Klangeffektparameter umfasst; und
Durchführen von Parameterauslegung an den Drahtloslautsprechern des Drahtloslautsprechersystems unter Verwendung des empfangenen Lautsprecherparameterauslegungsdatensatzes.

2. Verfahren nach Anspruch 1, wobei das Verfahren nach dem Prozess des Durchführens von Parameterauslegung an den Drahtloslautsprechern des Drahtloslautsprechersystems unter Verwendung des empfangenen Lautsprecherparameterauslegungsdatensatzes ferner umfasst:
Empfangen eines Titelkatalogs des Drahtloslautsprechersystems vom Server, wobei der Titelkatalog auf die Szenentypkombination abgestimmt ist; und
Steuern der Drahtloslautsprecher des Drahtloslautsprechersystems zur Wiedergabe von Titeln aus dem Titelkatalog.

3. Verfahren nach Anspruch 1 oder 2, wobei der Prozess des Sendens der Parameterauslegungsanforderung, die die Szenentypkombination der Drahtloslautsprecher des Drahtloslautsprechersystems enthält, an den Server umfasst:
Empfangen einer Erzeugungsanweisung bezüglich des Drahtloslautsprechersystems von einem Benutzer;
Erfassen der Szenentypkombination, die durch Szenentypen der in der Erzeugungsanweisung hinzugefügten Drahtloslautsprecher gebildet wird; und
Senden der Parameterauslegungsanforderung, die die Szenentypkombination der Drahtloslautsprecher trägt, an den Server.

4. Drahtloslautsprecherparameterauslegungsverfahren, das von einem Server ausgeführt wird, wobei das Verfahren folgende Vorgänge umfasst:
Empfangen einer Parameterauslegungsanforderung, die eine Szenentypkombination von Drahtloslautsprechern eines Drahtloslautsprechersystems trägt, von einem mobilen Endgerät; wobei die Szenentypkombination von Drahtloslautsprechern des Drahtloslautsprechersystems eine Kombination von Szenentypen der Drahtloslautsprecher des Drahtloslautsprechersystems ist, wobei die Szenentypen Raumtypen und Ortstypen umfassen; und
Senden einer Parameterauslegungsantwort, die einen Lautsprecherparameterauslegungsdatensatz des Drahtloslautsprechersystems trägt, an das mobile Endgerät, wobei der Lautsprecherparameterauslegungsdatensatz auf die Szenentypkombination abgestimmt ist und Parameter umfasst, die dafür ausgelegt sind, das Attribut der Wiedergabe des Drahtloslautsprechers einzustellen, wobei der Parameter einen Lautstärkeparameter und einen Klangeffektparameter umfasst.

5. Verfahren nach Anspruch 4, wobei das Verfahren nach dem Senden der Parameterauslegungsantwort, die den Lautsprecherparameterauslegungsdatensatz des Drahtloslautsprechersystems, der auf die Szenentypkombination abgestimmt ist, trägt, an das mobile Endgerät ferner umfasst:
Senden eines Titelkatalogs des Drahtlosmusiksystems an das mobile Endgerät, wobei der Titelkatalog auf die Szenentypkombination der Drahtloslautsprecher abgestimmt ist.

6. Mobiles Endgerät, umfassend:
eine Sendeeinheit (501), die dafür ausgelegt ist, eine Parameterauslegungsanforderung, die eine Szenentypkombination von Drahtloslautsprechern eines Drahtloslautsprechersystems trägt, an einen Server zu senden; wobei die Szenentypkombination von Drahtloslautsprechern des Drahtloslautsprechersystems eine Kombination von Szenentypen der Drahtloslautsprecher des Drahtloslautsprechersystems ist, wobei die Szenentypen Raumtypen und Ortstypen umfassen;
eine erste Empfangseinheit (502), die dafür ausgelegt ist, eine Parameterauslegungsantwort zu empfangen, die vom Server als Antwort auf die Parameterauslegungsanforderung gesendet wird, wobei die Parameterauslegungsantwort einen Lautsprecherparameterauslegungsdatensatz des Drahtloslautsprechersystems enthält, wobei der Lautsprecherparameterauslegungsdatensatz auf die Szenentypkombination abgestimmt ist und Parameter umfasst, die dafür ausgelegt sind, das Attribut der Wiedergabe jedes Drahtloslautsprechers einzustellen,
wobei der Parameter einen Lautstärkeparameter und einen Klangeffektparameter umfasst; und
eine Auslegungseinheit (503), die dafür ausgelegt ist, Parameterauslegung an den Drahtloslautsprechern des Drahtloslautsprechersystems unter Verwendung des empfangenen Lautsprecherparameterauslegungsdatensatzes durchzuführen.

7. Mobiles Endgerät nach Anspruch 6, ferner umfassend:
eine zweite Empfangseinheit, die dafür ausgelegt ist, einen Titelkatalog des Drahtlosmusiksystems vom Server zu empfangen, wobei der Titelkatalog auf die Szenentypkombination abgestimmt ist; und
eine Wiedergabeeinheit, die dafür ausgelegt ist, die Drahtloslautsprecher des Drahtloslautsprechersystems zur Wiedergabe von Titeln aus dem Titelkatalog zu steuern.

8. Server, umfassend:
eine Empfangseinheit (601), die dafür ausgelegt ist, eine Parameterauslegungsanforderung, die eine Szenentypkombination von Drahtloslautsprechern eines Drahtloslautsprechersystems trägt, von einem mobilen Endgerät zu empfangen; wobei die Szenentypkombination von Drahtloslautsprechern des Drahtloslautsprechersystems eine Kombination von Szenentypen der Drahtloslautsprecher des Drahtloslautsprechersystems ist, wobei die Szenentypen Raumtypen und Ortstypen umfassen; und
eine erste Sendeeinheit (602), die dafür ausgelegt ist, eine Parameterauslegungsantwort, die einen Lautsprecherparameterauslegungsdatensatz des Drahtloslautsprechersystems trägt, an das mobile Endgerät zu senden, wobei der Lautsprecherparameterauslegungsdatensatz auf die Szenentypkombination abgestimmt ist und Parameter umfasst, die dafür ausgelegt sind, das Attribut der Wiedergabe jedes Drahtloslautsprechers einzustellen, wobei der Parameter einen Lautstärkeparameter und einen Klangeffektparameter umfasst.

9. Server nach Anspruch 8, ferner umfassend:
eine zweite Sendeeinheit, die dafür ausgelegt ist, einen Titelkatalog des Drahtlosmusiksystems an das mobile Endgerät zu senden, wobei der Titelkatalog auf die Szenentypkombination der Drahtloslautsprecher abgestimmt ist.

10. Lautsprecherparameterauslegungssystem, umfassend ein mobiles Endgerät nach Anspruch 6 oder Anspruch 7 und einen Server nach Anspruch 8 oder Anspruch 9.

11. Speichermedium mit darauf gespeicherten Anwendungsprogrammen, wobei die Anwendungsprogramme dazu eingerichtet sind, das Lautsprecherparameterauslegungsverfahren nach einem der Ansprüche 1 bis 3 durchzuführen.

12. Speichermedium mit darauf gespeicherten Anwendungsprogrammen, wobei die Anwendungsprogramme dazu eingerichtet sind, das Lautsprecherparameterauslegungsverfahren nach Anspruch 4 oder Anspruch 5 durchzuführen.

13. Vorrichtung, umfassend:
einen oder mehrere Prozessoren; und
einen Speicher, in dem ein oder mehrere Programme gespeichert sind, wobei das eine oder die mehreren Programme dazu eingerichtet sind, den einen oder die mehreren Prozessoren zu veranlassen, das Lautsprecherparameterauslegungsverfahren nach einem der Ansprüche 1 bis 3 durchzuführen.

14. Vorrichtung, umfassend:
einen oder mehrere Prozessoren; und
einen Speicher, in dem ein oder mehrere Programme gespeichert sind, wobei das eine oder die mehreren Programme dazu eingerichtet sind, den einen oder die mehreren Prozessoren zu veranlassen, das Lautsprecherparameterauslegungsverfahren nach Anspruch 4 oder Anspruch 5 durchzuführen.

## Revendications

1. Procédé de configuration de paramètres de haut-parleur sans fil, réalisé par un terminal mobile, le procédé comprenant les étapes consistant à :
transmettre à un serveur une demande de configuration de paramètres contenant une combinaison de types de scène de haut-parleurs sans fil d'un système de haut-parleurs sans fil ; la combinaison de types de scène de haut-parleurs sans fil du système de haut-parleurs sans fil étant une combinaison de types de scène des haut-parleurs sans fil du système de haut-parleurs sans fil, les types de scène comprenant des types de pièce et des types de localisation ;
recevoir une réponse de configuration de paramètres envoyée par le serveur en réponse à la demande de configuration de paramètres, la réponse de configuration de paramètres contenant un enregistrement de configuration de paramètres de haut-parleur du système de haut-parleurs sans fil, l'enregistrement de configuration de paramètres de haut-parleur étant mis en correspondance avec la combinaison de types de scène et comprenant des paramètres configurés pour régler l'attribut de lecture de chaque haut-parleur sans fil, le paramètre comprenant un paramètre de volume et un paramètre d'effet sonore ; et
réaliser une configuration de paramètres sur les haut-parleurs sans fil du système de haut-parleurs sans fil par l'intermédiaire de l'utilisation de l'enregistrement de configuration de paramètres de haut-parleur reçu.

2. Procédé selon la revendication 1, le procédé comprenant en outre, après la réalisation d'une configuration de paramètres sur les haut-parleurs sans fil du système de haut-parleurs sans fil par l'intermédiaire de l'utilisation de l'enregistrement de configuration de paramètres de haut-parleur reçu, les étapes consistant à :
recevoir un catalogue de chansons du système de haut-parleurs sans fil en provenance du serveur, le catalogue de chansons étant mis en correspondance avec la combinaison de types de scène ; et
commander les haut-parleurs sans fil du système de haut-parleurs sans fil pour lire des chansons du catalogue de chansons.

3. Procédé selon la revendication 1 ou 2, dans lequel le processus de transmission au serveur de la demande de configuration de paramètres contenant la combinaison de types de scène de haut-parleurs sans fil du système de haut-parleurs sans fil comprend les étapes consistant à :
recevoir une instruction de création concernant le système de haut-parleurs sans fil en provenance d'un utilisateur ;
acquérir la combinaison de types de scène formée par des types de scène des haut-parleurs sans fil ajoutés dans l'instruction de création ; et
transmettre au serveur la demande de configuration de paramètres transportant la combinaison de types de scène des haut-parleurs sans fil.

4. Procédé de configuration de paramètres de haut-parleur sans fil, réalisé par un serveur, le procédé comprenant les étapes consistant à :
recevoir, en provenance d'un terminal mobile, une demande de configuration de paramètres transportant une combinaison de types de scène de haut-parleurs sans fil d'un système de haut-parleurs sans fil ; la combinaison de types de scène de haut-parleurs sans fil du système de haut-parleurs sans fil étant une combinaison de types de scène des haut-parleurs sans fil du système de haut-parleurs sans fil, les types de scène comprenant des types de pièce et des types de localisation ; et
transmettre au terminal mobile une réponse de configuration de paramètres transportant un enregistrement de configuration de paramètres de haut-parleur du système de haut-parleurs sans fil, l'enregistrement de configuration de paramètres de haut-parleur étant mis en correspondance avec la combinaison de types de scène et comprenant des paramètres configurés pour régler l'attribut de lecture du haut-parleur sans fil, le paramètre comprenant un paramètre de volume et un paramètre d'effet sonore.

5. Procédé selon la revendication 4, le procédé comprenant en outre, après la transmission au terminal mobile de la réponse de configuration de paramètres transportant l'enregistrement de configuration de paramètres de haut-parleur du système de haut-parleurs sans fil mis en correspondance avec la combinaison de types de scène, l'étape consistant à :
transmettre un catalogue de chansons du système musical sans fil au terminal mobile, le catalogue de chansons étant mis en correspondance avec la combinaison de types de scène des haut-parleurs sans fil.

6. Terminal mobile, comprenant :
une unité de transmission (501), configurée pour transmettre à un serveur une demande de configuration de paramètres transportant une combinaison de types de scène de haut-parleurs sans fil d'un système de haut-parleurs sans fil ; la combinaison de types de scène de haut-parleurs sans fil du système de haut-parleurs sans fil étant une combinaison de types de scène des haut-parleurs sans fil du système de haut-parleurs sans fil, les types de scène comprenant des types de pièce et des types de localisation ;
une première unité de réception (502), configurée pour recevoir une réponse de configuration de paramètres envoyée par le serveur en réponse à la demande de configuration de paramètres, la réponse de configuration de paramètres contenant un enregistrement de configuration de paramètres de haut-parleur du système de haut-parleurs sans fil, l'enregistrement de configuration de paramètres de haut-parleur étant mis en correspondance avec la combinaison de types de scène et comprenant des paramètres configurés pour régler l'attribut de lecture de chaque haut-parleur sans fil, le paramètre comprenant un paramètre de volume et un paramètre d'effet sonore ; et
une unité de configuration (503), configurée pour réaliser une configuration de paramètres sur les haut-parleurs sans fil du système de haut-parleurs sans fil par l'intermédiaire de l'utilisation de l'enregistrement de configuration de paramètres de haut-parleur reçu.

7. Terminal mobile selon la revendication 6, comprenant en outre :
une seconde unité de réception, configurée pour recevoir un catalogue de chansons du système musical sans fil en provenance du serveur, le catalogue de chansons étant mis en correspondance avec la combinaison de types de scène ; et
une unité de lecture, configurée pour commander les haut-parleurs sans fil du système de haut-parleurs sans fil pour lire des chansons du catalogue de chansons.

8. Serveur comprenant :
une unité de réception (601), configuré pour recevoir, en provenance d'un terminal mobile, une demande de configuration de paramètres transportant une combinaison de types de scène de haut-parleurs sans fil d'un système de haut-parleurs sans fil ; la combinaison de types de scène de haut-parleurs sans fil du système de haut-parleurs sans fil étant une combinaison de types de scène des haut-parleurs sans fil du système de haut-parleurs sans fil, les types de scène comprenant des types de pièce et des types de localisation ; et
une première unité de transmission (602), configurée pour transmettre au terminal mobile une réponse de configuration de paramètres transportant un enregistrement de configuration de paramètres de haut-parleur du système de haut-parleurs sans fil, l'enregistrement de configuration de paramètres de haut-parleur étant mis en correspondance avec la combinaison de types de scène et comprenant des paramètres configurés pour régler l'attribut de lecture de chaque haut-parleur sans fil, le paramètre comprenant un paramètre de volume et un paramètre d'effet sonore.

9. Serveur selon la revendication 8, comprenant en outre :
une seconde unité de transmission, configurée pour transmettre un catalogue de chansons du système musical sans fil au terminal mobile, le catalogue de chansons étant mis en correspondance avec la combinaison de types de scène des haut-parleurs sans fil.

10. Système de configuration de paramètres de haut-parleur, comprenant un terminal mobile selon la revendication 6 ou 7 et un serveur selon la revendication 8 ou 9.

11. Support de stockage sur lequel sont stockés des programmes d'application, les programmes d'application étant conçus pour mettre en œuvre le procédé de configuration de paramètres de haut-parleur selon l'une quelconque des revendications 1 à 3.

12. Support de stockage sur lequel sont stockés des programmes d'application, les programmes d'application étant conçus pour mettre en œuvre le procédé de configuration de paramètres de haut-parleur selon la revendication 4 ou 5.

13. Appareil, comprenant :
un ou plusieurs processeurs ; et
une mémoire sur laquelle sont stockés un ou plusieurs programmes, le ou les programmes étant conçus pour amener le ou les processeurs à mettre en œuvre le procédé de configuration de paramètres de haut-parleur selon l'une quelconque des revendications 1 à 3.

14. Appareil, comprenant :
un ou plusieurs processeurs ; et
une mémoire sur laquelle sont stockés un ou plusieurs programmes, le ou les programmes étant conçus pour amener le ou les processeurs à mettre en œuvre le procédé de configuration de paramètres de haut-parleur selon la revendication 4 ou 5.
